# EUROPÄISCHE PATENTSCHRIFT

(11) **EP 0 384 979 B1**
(45) Veröffentlichungstag und Bekanntmachung des Hinweises auf die Patenterteilung: **29.09.1993**
(21) Anmeldenummer: 89123877.6
(22) Anmeldetag: 23.12.1989
(51) Int. Cl.: B65G 59/06

(54) **Vereinzelungsvorrichtung für Buchblockstapel**
Separating device for a stack of inner books
Dispositif de séparation pour une pile de corps d'ouvrage

(30) Priorität: 27.02.1989 CH 715/89
(43) Veröffentlichungstag der Anmeldung: 05.09.1990
(73) Patentinhaber: GRAPHA-HOLDING AG, 6052 Hergiswil (CH)
(72) Erfinder: Hofer, Peter, CH-8556 Wigoltingen (CH)
(74) Vertreter: Fillinger, Peter, Dr.

(56) Entgegenhaltungen:
- EP-A- 0 265 749
- EP-A- 0 265 749
- US-A- 1 634 088
- US-A- 2 731 131
- US-A- 2 780 342
- PATENT ABSTRACTS OF JAPAN, Band 10, Nr. 346 (M-537)[2402], 21. November 1986; & JP-A-61 145 047 (MUNEHARU FUKUMOTO) 02-07-1986
- IDEM

## Beschreibung

Die vorliegende Erfindung bezieht sich auf eine Vereinzelungsvorrichtung gemäss dem Oberbegriff des Anspruchs 1.

Schneidmaschinen zum dreiseitigen Beschneiden von Buchblöcken und Broschüren sind bekannt (z.B. CH-A-645 294). Die höchst mögliche Arbeitsgeschwindigkeit (Taktzahl pro Zeiteinheit) einer Schneidmaschine ist aber deutlich kleiner als die eines im Fertigungsprozess vorgeschalteten Klebebinders. Zur Beseitigung dieses Leistungsunterschiedes ist es daher üblich, zwischen dem Klebebinder und der Schneidmaschine mehrere Buchblöcke oder Broschüren zu einem Stapel solcher Höhe aufeinander zu legen, dass in der Schneidmaschine jeweils der volle Hubweg der Messer mit jedem Schneidtakt ausgenutzt werden kann. Damit konnte das bisherige Splitting im Produktionsfluss mindestens teilweise vermieden werden.

Da nach dem Schneiden die Buchblöcke einzeln zu adressieren und danach für den Versand zu Postbotenpaketen unterschiedlicher Grösse zu vereinen sind, müssen die Stapel nach dem Schneiden wieder vereinzelt werden. Der Ausstoss der Schneidmaschine wurde daher wie beim Beschneiden einzelner Buchblöcke einer Vereinzelungsvorrichtung zugeführt, wie sie beispielsweise in der EP-A -265 749 beschrieben ist. Solche Vereinzelungsvorrichtungen erfordern eine vergleichsweise aufwendige Beschickungseinrichtung und zudem vergleichsweise viel Platz, da sie im Produktionsfluss eine Pufferfunktion zu übernehmen haben.

Die vorliegende Erfindung stellt sich daher die Aufgabe, eine Vereinzelungsvorrichtung zu schaffen, die der Arbeitsgeschwindigkeit einer modernen Klebebindemaschine zu folgen vermag und die mit geringem Aufwand auf das zu verarbeitende Format sowie die Dicke der Buchblöcke eingestellt werden kann und die in der Lage ist, ohne Pufferstrecke die Vereinzelung taktsynchron sowohl mit den vorangehenden als auch nachfolgenden Verarbeitungsmaschinen vorzunehmen.

Erfindungsgemäss wird diese Aufgabe gelöst durch die kennzeichnenden Merkmale des Anspruchs 1.

Anhand der beiliegenden schematischen Zeichnung wird die Erfindung beispielsweise erläutert.

In der gezeigten Vorrichtung bilden zwei Endlosförderer 1 und 2 sowie ein Gleittisch 3 eine Förderebene 4 in der die oberen Trums der Endlosförderer 1, 2 in Förderrichtung 5 wirken. Die Endlosförderer 1, 2 sind kontinuierlich angetrieben, wobei der obere Trum des ersten bis zu einer Umlenkwalze 6 auf dem Gleittisch 3 gleitet. Die Förderebene 4 übernimmt von einer Schneidvorrichtung 7 beschnittene Buchblockstapel 8, die aus übereinander liegenden Buchblöcken 81 bis 84 bestehen und transportiert sie in Richtung des Pfeiles 5 ab.

Über der Förderebene 4 und quer zur Förderrichtung 5 ist eine Anschlagschiene 10 angebracht, die mittels einer Stange 11 in einem Lager 12 in Richtung des Doppelpfeiles 13 verschiebbar gelagert ist. Die Förderebene 4 umfasst einen Anhaltebereich 14, der nach vorne durch die Anschlagschiene 10 begrenzt ist und in dem die gegen die Anschlagschiene 10 auflaufenden Stapel 8 zurückgehalten werden. Die Verstellung der Anschlagschiene 10 und damit des Anhaltebereichs 14 in Richtung des Doppelpfeiles 13 erfolgt in Anpassung an das zu verarbeitende Buchblockformat. Das Lager 12 und mit ihm die Anschlagschiene 10 sind zusätzlich höhenverstellbar (Pfeil 15), um die Durchtrittshöhe 16 der Buchblockdicke 17 anpassen zu können. Die Durchtrittshöhe 16 ist mindestens näherungsweise gleich jedoch grösser als die Dicke 17 der Buchblöcke, so dass der jeweils unterste Buchblock 81 bis 84 eines Stapels 8 unter der Anschlagschiene 10 hindurch geschoben werden kann, während die darüber liegenden Buchblöcke zurückgehalten werden.

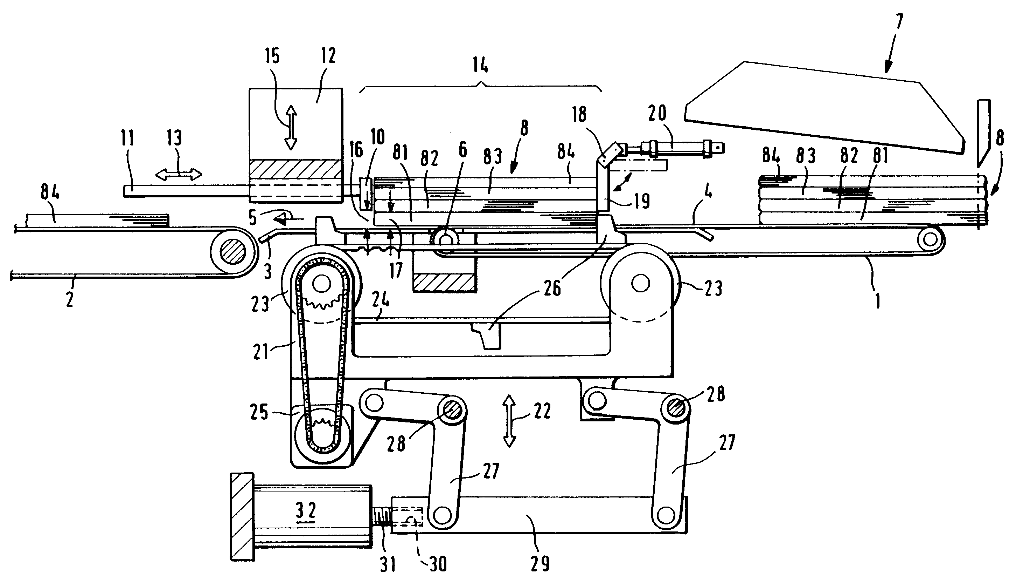

Quer über dem Anfang des Anhaltebereiches 14 befindet sich eine Schwenkachse 18 an der eine Klappe 19 schwenkbar gelagert ist. Ein Linearmotor 20 verschwenkt die Klappe 19 zwischen einer vertikalen (in der Zeichnung mit ausgezogenen Strichen gezeigten) und einer horizontalen, strichpunktiert gezeichneten Stellung. Befindet sich die Klappe 19 in einer horizontalen Lage, kann ein Buchblockstapel 8 unter ihr hindurch gegen die Anschlagschiene 10 bewegt werden. Wird sie in die senkrechte Lage verschwenkt, hält sie einen im Anhaltebereich 14 befindlichen Stapel 8 in Anlage mit der Anschlagschiene 10, so dass dieser trotz des kontinuierlich weiterlaufenden Endlosförderers 1 exakt ausgerichtet bleibt.

Unterhalb der Förderebene befindet sich ein Gestell 21, das in Richtung des Doppelpfeiles 22 höhenverstellbar ist. Am Gestell 21 sind zwei Umlenkrollen 23 gelagert, um die ein endloser Strang 24 geführt ist. Die eine der beiden Umlenkrollen 23 ist durch einen Schrittmotor 25 antreibbar. Mit dem Strang 24 fest verbunden sind drei Ausstosser 26, deren Abstand grösser als die Länge des Anhaltebereiches 14 ist, und die entlang dem oberen Trum über die Förderebene 4 vorstehen. Die Vorstehhöhe darf aber höchstens gleich der Dicke 17 der Buchblöcke sein. Zur Einstellung der Vorstehhöhe der Ausstosser 26 ist das Gestell 21 an zwei Winkelhebeln 27 angelenkt, die um zwei ortsfeste Achsen 28 schwenkbar sind. Das andere Ende der Winkelhebel 27 ist gelenkig mit einer Stange 29 verbunden, die mit einem achsialen Innengewinde 30 versehen ist. In dieses greift eine Spindel 31, die durch einen ortsfesten Motor 32 drehbar ist. Die Vorstehhöhe ändert sich somit entsprechend der achsialen Verschiebelage der Stange 29.

Die Schneidvorrichtung 7, der erste Endlosförderer 1 sowie der Strang 24 sind taktsynchron angetrieben, derart, dass ein in den Anhaltebereich 14 einlaufender Stapel 8 sich zwischen zwei folgenden Ausstossern 26 bewegt und dass der erste Ausstosser 26 ungefähr in dem Zeitpunkt auf den Stapel trifft, in dem die Klappe 19 nach unten geschwenkt ist.

Befindet sich im Anhaltebereich 14 ein Stapel 8 zwischen der Anschlagschiene 10 und der Klappe 19, treibt der Schrittmotor 25 den Strang 24 weiter an und die Ausstosser 26 schieben nacheinander die Buchblöcke 81 bis 84 unter der Anschlagschiene 10 hindurch auf den Endlosförderer 2. Ist ein Stapel 8 in dieser Weise vereinzelt, wird die Klappe 19 in die Horizontale verschwenkt, so dass der nächste von der Schneidvorrichtung 7 ankommende Stapel 8 in den Anhaltebereich 14 einlaufen kann, worauf sich die Klappe 19 schliesst und der nächste Vereinzelungsvorgang einsetzt.

Sind Buchblöcke grösseren Formats zu verarbeiten, wird die Anschlagschiene 10 in Richtung des Pfeiles 13 verstellt, bis ihr Abstand zur Klappe 19 dem neuen Format entspricht.

Werden dickere Buchblöcke verarbeitet, so dass z.B. die Stapel nur noch drei solcher Buchblöcke enthalten, wird das Lager 12 in Richtung des Pfeiles 15 verschoben, bis die Durchtrittshöhe 16 der neuen Buchblockdicke 17 entspricht. Gleichzeitig wird mittels des Motors 32 die Vorstehhöhe der Ausstosser 26 auf die neue Buchblockdicke 17 eingestellt.

## Patentansprüche

1. Vorrichtung zum Vereinzeln von übereinander gestapelten Buchblöcken (81 bis 84), von denen jeweils wenigstens der unterste, auf einer Förderebene (4) liegenden Buchblock (81 bis 84) mittels eines an einem endlos umlaufenden Strang (24) befestigten und in seinem Förderbereich über der Förderebene (4) vorstehenden Ausstossers (26) unterhalb einer eine Durchtrittsöffnung bildenden höhenverstellbaren Anschlagschiene (10) weggeführt wird, dadurch gekennzeichnet, dass die Anschlagschiene (10) wenigstens annähernd das vordere Ende eines im wesentlichen durch den Förderbereich der Ausstosser (26) bestimmten Anhaltebereiches (14) bildet, welcher wenigstens teilweise durch den Endbereich eines mit einer vorgeschalteten Schneidmaschine kommunizierenden Endlosförderers (1) ausgebildet ist.

2. Vereinzelungsvorrichtung nach Anspruch 1, dadurch gekennzeichnet, dass sich der Vorlauf des Ausstossers (26) über den Anhaltebereich (14) hinaus bis hinter die Anschlagschiene (10) erstreckt.

3. Vereinzelungsvorrichtung nach Anspruch 1 oder 2, dadurch gekennzeichnet, dass am Anfang des Anhaltebereiches (14) quer über der Förderebene (4) eine schwenkbare Klappe (19) vorhanden ist, die in einer ersten Schwenklage den Durchtritt für einen Buchblockstapel (8) ermöglicht und in einer zweiten Schwenklage den Buchblockstapel (8) in Anlage mit der Anschlagschiene (10) hält.

4. Vereinzelungsvorrichtung nach Anspruch 1, dadurch gekennzeichnet, dass unter der Förderebene (4) ein endloser Strang (24) derart angeordnet ist, dass einer seiner Trums parallel zur Förderebene (4) verläuft und in Förderrichtung (5) wirkt, und dass am Strang (24) mindestens ein Ausstosser (26) vorhanden ist.

5. Vereinzelungsvorrichtung nach Anspruch 4, dadurch gekennzeichnet, dass der Strang (24) durch einen Schrittmotor (25) antreibbar ist.

6. Vereinzelungsvorrichtung nach Anspruch 5, dadurch gekennzeichnet, dass der Strang (24) und der Schrittmotor (25) gemeinsam mit Bezug auf die Förderebene (4) höhenverstellbar sind, zum Zweck, den Ausstosser (26) während seines Vorlaufs entsprechend der Dicke eines Buchblocks (81 - 84) über die Förderebene (4) vorstehen zu lassen.

7. Vereinzelungsvorrichtung nach Anspruch 1, dadurch gekennzeichnet, dass die Anschlagschiene (10) höhenverstellbar ist, damit die Höhe (16) der Durchtrittsöffnung an die Dicke (17) der Buchblöcke (81 - 84) anpassbar ist.

8. Vereinzelungsvorrichtung nach den Ansprüchen 1 und 3, dadurch gekennzeichnet, dass der Abstand der Anschlagschiene (10) von der Klappe (19) und damit die Länge des Anhaltebereichs (14) einstellbar ist.

9. Aggregat zum Beschneiden und Vereinzeln von Buchblockstapeln (8) mit einer Vereinzelungsvorrichtung nach einem der Ansprüche 1 bis 8 und mit einer Schneidvorrichtung (7), dadurch gekennzeichnet, dass der Endlosförderer (1) für das Zuführen der Buchblockstapel (8) als Abförderer der Schneidvorrichtung (7) von dieser die beschnittenen Buchblockstapel (8) übernimmt, und dass die Schneidvorrichtung (7), der Endlosförderer (1) und der Ausstosser (26) taktgebunden angetrieben sind.

## Claims

1. An apparatus for separating book blocks (81 to 84) stacked on top of each other, of which at least the lowest book block (81 to 84) lying on a transport plane (4) each time is conveyed away underneath a height-adjustable stop rail (10) forming a passage opening, by means of an ejector (26) which is fastened to an endless circulating track (24) and which has its conveyor portion projecting above the transport plane (4), characterised in that the stop rail (10) at least approximately forms the front end of a holding region (14) essentially defined by the conveyor portion of the ejector (26), which holding region is at least partially formed by the end region of an endless conveyor (1) communicating with an upstream cutting machine.

2. A separating apparatus according to claim 1, characterised in that the forward movement of the ejector (26) extends beyond the holding region (14) and behind the stop rail (10).

3. A separating apparatus according to claim 1 or 2, characterised in that a pivoting flap (19) is present extending transversely over the transport plane (4) at the start of the holding region (14), which flap in a first pivotal position permits the passage of a book block stack (8) and in a second pivotal position holds the book block stack (8) in contact with the stop rail (10).

4. A separating apparatus according to claim 1, characterised in that an endless track (24) is disposed below the transport plane (4) in such a way that one of its spans runs parallel to the transport plane (4) and acts in the conveying direction (5), and that at least one ejector (26) is provided on the track (24).

5. A separating apparatus according to claim 4, characterised in that the track (24) can be driven by a stepper motor (25).

6. A separating apparatus according to claim 5, characterised in that the track (24) and the stepper motor (25) are jointly height-adjustable in relation to the transport plane (4) for the purpose of causing the ejector (26) during its forward motion to project above the transport plane (4) by an amount corresponding to the thickness of a book block (81 - 84).

7. A separating apparatus according to claim 1, characterised in that the stop rail (10) is height-adjustable so that the height (16) of the passage opening can be adapted to the thickness (17) of the book blocks (81 - 84).

8. A separating apparatus according to claims 1 and 3, characterised in that the distance of the stop rail (10) from the flap (19) and thereby the length of the holding region (14) is adjustable.

9. A unit for trimming and separating book block stacks (8) with a separating apparatus according to any one of claims 1 to 8 and with a cutting apparatus (7), characterised in that the endless conveyor (1) for feeding the book block stacks (8) takes over the trimmed book block stacks (8) from the cutting apparatus (7) as the discharge conveyor for the latter, and that the cutting apparatus (7), the endless conveyor (1) and the ejector (26) are driven in a clock-pulse-controlled manner.

## Revendications

1. Dispositif de séparation de corps d'ouvrages empilés les uns sur les autres (81 à 84), dont au moins toujours le corps d'ouvrage (81 à 84)reposant sur un plan de convoyage (4) est entraîné par un éjecteur (26) fixé à une courroie sans fin (24) en circuit fermé et faisant saillie dans son domaine de transfert au-dessus du plan de convoyage (4) en dessous d'un rail de butée (10) réglable en hauteur et formant un orifice de passage, caractérisé en ce que le rail de butée (10) forme au moins approximativement l'extrémité antérieure d'un domaine d'attente (14) déterminé par le domaine de convoyage de l'éjecteur (26), qui est formé au moins en partie par le domaine terminal d'un convoyeur à bande sans fin (1) communiquant avec un massicot placé en amont.

2. Dispositif de séparation de corps d'ouvrages selon la revendication 1, caractérisé en ce que le domaine d'action de l'éjecteur (26) s'étend au-delà du domaine d'attente (14) jusqu'après le rail de butée (10).

3. Dispositif de séparation de corps d'ouvrages selon la revendication 1 ou 2, caractérisé en ce qu'au début du domaine d'attente (14) se trouve transversalement par rapport au plan de convoyage (4) un volet pivotable (19), qui, dans une première position pivotée permet le passage d'une pile de corps d'ouvrages (8) et dans une deuxième position pivotée maintient la pile de corps d'ouvrage (8) en coopération avec le rail de butée (10).

4. Dispositif de séparation selon la revendication 1, caractérisé en ce qu'en dessous du plan de convoyage (4) est disposée une courroie sans fin (24) de sorte que l'un de ses tambours s'étend parallèlement au plan de convoyage (4) et est efficace dans le sens de transfert (5) et que sur la courroie (24) se trouve au moins un éjecteur (26).

5. Dispositif de séparation selon la revendication 4, caractérisé en ce que la courroie (24) est entraînable par un moteur pas à pas (25).

6. Dispositif de séparation selon la revendication 5, caractérisé en ce que la courroie (24) et le moteur pas à pas (25) sont réglables ensemble en hauteur par rapport au plan de convoyage (4) pour remonter l'éjecteur (26) d'une hauteur au-dessus du plan de convoyage (4) correspondant à l'épaisseur d'un corps d'ouvrage (81 - 84) lors de son avancement.

7. Dispositif de séparation selon la revendication 1, caractérisé en ce que le rail de butée (10) est réglable en hauteur afin que la hauteur (16) de l'orifice de passage soit adaptable à l'épaisseur (17) des corps d'ouvrages (81 - 84).

8. Dispositif de séparation selon les revendications 1 et 3, caractérisé en ce qu'on peut régler l'écartement entre le rail de butée (10) et le volet (19) et ainsi la longueur du domaine d'attente (14).

9. Appareil de coupe et de séparation de piles de corps d'ouvrages (8) avec un dispositif de séparation selon l'une des revendications 1 à 8, caractérisé en ce que le convoyeur à bande sans fin (1) sert à transférer la pile de corps d'ouvrages (8) en tant que déchargeur du dispositif de coupe (7) des piles de corps d'ouvrage (8) massicotées, et que le dispositif de coupe (7), le convoyeur à bande sans fin (1) et l'éjecteur (26) sont entraînés en synchronisme.
